# EUROPEAN PATENT SPECIFICATION

(11) **EP 0 549 059 B1**
(45) Date of publication and mention of the grant of the patent: **07.08.1996**
(21) Application number: 92203967.2
(22) Date of filing: 16.12.1992
(51) Int. Cl.: B05C 11/10, B29C 65/54, G05D 7/00

(54) **Device for making a seam joint in, for example, floor covering**
Gerät zum Herstellen einer Nahtverbindung, für zum Beispiel Fussböden
Appareil pour la réalisation d'un cordon de raccordement dans, par exemple, un revêtement de sol

(30) Priority: 18.12.1991 NL 9102120
(43) Date of publication of application: 30.06.1993
(73) Proprietor: FORBO- NOVILON PRODUKTIEBEDRIJVEN B.V., NL-7741 KC Coevorden (NL)
(72) Inventor: Verkaik, Marcel, NL-2612 AX Delft (NL); Bulthuis, Gerard Roel, NL-7908 MR Hoogeveen (NL)
(74) Representative: de Bruijn, Leendert C.

(56) References cited:
- EP-A- 0 124 188
- DE-A- 1 573 118
- DE-A- 3 802 548
- FR-A- 2 563 752
- FR-E- 0 089 962
- US-A- 2 962 082
- US-A- 4 260 273

## Description

The present invention relates to a device for making a seam join, by feeding in an adhesive, in sheet material such as floor covering or wall covering in, for example, lengths or tiles according to the preamble of claim 1.

A device comprising the features of the preamble of claim 1 has been published in DE-A-3 802 548. In this device it is difficult to replace the reservoir for the adhesive material.

A further mobile device of the abovementioned type is known from, for example, DE-A-2,140,608, by means of which device a liquid is introduced in the seam for making the seam join. For this, the device is provided with a reservoir for holding said liquid. Said liquid flows out of the reservoir under the influence of gravity, and the outflow velocity can be set by means of a set screw depending on, for example, the viscosity of the liquid. By running the device over the seam, the latter is filled with the liquid flowing out of the reservoir at a constant velocity.

Another device of the type described above is known from US Patent Specification 4,260,273. A reservoir which contains a liquid for making the seam join and which can be pressed empty by hand can be placed in this mobile device.

The disadvantage of these known devices is that it is difficult to treat the seam with a quantity of adhesive uniformly distributed over the length of the seam. For this purpose, in the case of the device according to DE-A-2,140,608 the device must be moved at a predetermined constant speed over the seam with a constant outflow velocity of the liquid. In the case of the device according to US-A-4,260,273 the speed of pressing the reservoir empty must be adapted to the speed at which the device is moved over the seam. Great skill is therefore required of the operator of the device in order to achieve a good seam join with the optimum appearance.

The object of the present invention is to eliminate the disadvantages of the known devices described above. For this, a device of the type mentioned in the introduction is provided comprising the features of the characterising portion of claim 1, in which device, furthermore, the metering of the adhesive during the making of the seam join is regulated depending on the speed at which the device is moved over the seam. If, for example, changes in speed occur when the seam join is being made, these do not cause, for example, changes in the quality of the seam join. This means that a particularly good quality of seam join can be achieved in a simple way. For example, when the sheet materials are being welded together to produce the seam join, it has now also become possible to let the device rest temporarily or to make it move very slowly, without the risk of scorching the sheet materials. If a liquid is being delivered as the adhesive, no more liquid will be delivered when the device has stopped.

In order to adapt the degree of delivery of the adhesive to, for example, the dimensions of the seam or the viscosity of the adhesive, it is preferable to ensure that the speed-dependent metering of the adhesive can be adapted to those variables. If said metering is entirely mechanical, which is preferable if a liquid-filled reservoir which is pressed empty is being used, it is preferable to use a continuously variable transmission which is known per se, in which use is made of walls of revolution which are spaced apart and extend coaxially and congruently, and are connected to the movement recording means and the feed means respectively, and which are mutually coupled with a body of revolution which is movable parallel to the axis of rotation thereof. This permits a very compact construction of the device, while the transmission ratio is simple to adjust.

For achieving a seam join with a liquid as the adhesive it is common in the case of, for example, vinyl materials to use PVC dissolved in solvent. In order to prevent this medium from drying out, contact with the air must be minimised. According to the present invention, the device is therefore formed in such a way that the reservoir for holding such a liquid adhesive is easy to remove from and place in the device. This makes it possible to use, for example, disposable, pre-filled, reservoirs.

For simple filling of the seam with liquid adhesive it is appropriate to provide the device with a needle-shaped outflow pipe for said adhesive, and means for widening the seam in the region of the needle-shaped outflow pipe. The latter means can be, for example, plough-shaped means. In addition, it is advantageous if the depth which this needle-shaped outflow pipe projects into the sheet is adjustable. It is also advantageous if the needle-shaped outflow pipe and the means for widening the seam are protected and the needle-shaped outflow pipe is shut off when the device is not in use, in order to prevent the adhesive in the reservoir from drying out. For this, it is preferable for the needle-shaped outflow pipe and the means for widening the seam to be enclosed by a cap-shaped element which is slidable essentially in the lengthwise direction of said outflow pipe, preferably against the action of a spring device.

The invention will be explained in greater detail below with reference to the appended drawings, in which:
Fig. 1 shows a perspective view of a first embodiment of the device according to the present invention;
Fig. 2 shows a bottom view of the device shown in Fig. 1; and
Fig. 3 shows a perspective view of a second embodiment of the device according to the invention.

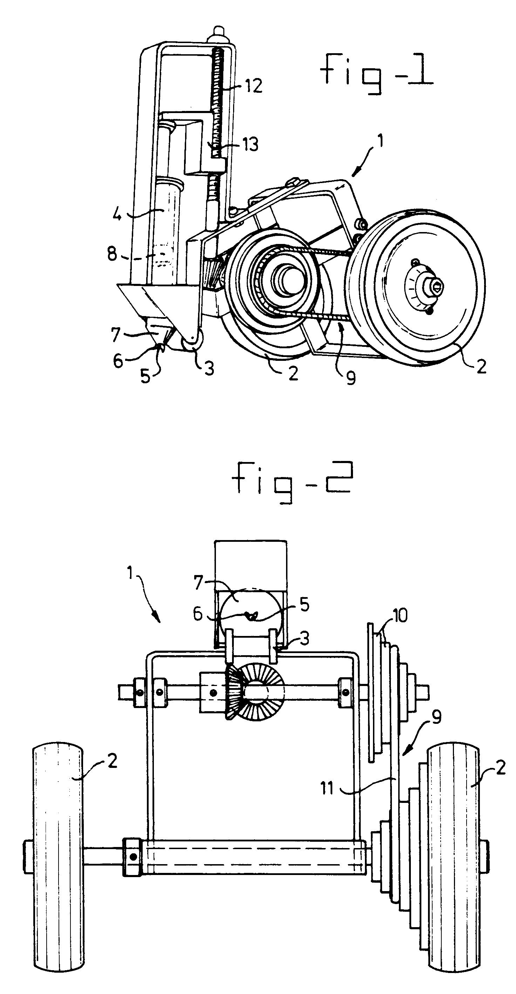

With reference to Figs. 1 and 2, a device 1 which is mobile by means of wheels 2 and roller 3 is shown.

The device contains a reservoir 4 filled with a liquid adhesive. This reservoir 4 is easy to remove from and place in the device. This reservoir 4 is in liquid communication with a needle-shaped outflow pipe 5 which is situated on the bottom of the device, and out of which the liquid adhesive can flow. In the region of the free end of this needle-shaped outflow pipe 5 are plough-shaped means 6. These plough-shaped means 6 locally widen the seam of sheet-type parts (not shown) to be joined together, so that space is provided for the needle-shaped outflow pipe 5 to be inserted into the seam. A cap 7 is provided above the needle-shaped outflow pipe 5 and the plough-shaped means 6. This cap 7 is held in the position shown in Fig. 1 against the action of a spring (not shown) when the device 1 is placed on a surface. When the device 1 is removed from said surface this cap 7 will automatically slide over the needle-shaped outflow pipe 5 and the plough-shaped means 6 through the action of the spring (not shown), so that said pipe and means are protected and the adhesive in the reservoir 4 and the outflow pipe 5 is shut off from the air.

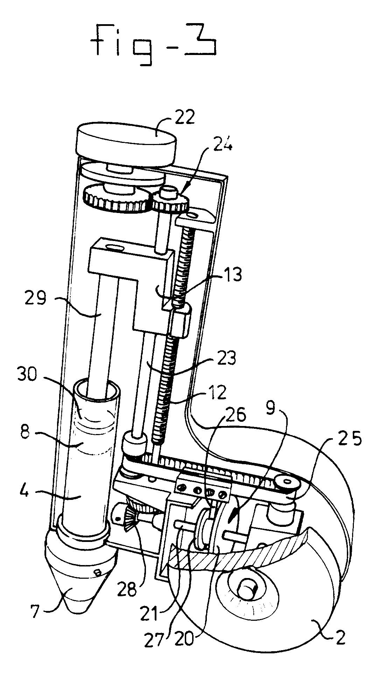

A piston 8 can be moved inside the reservoir 4 in the direction of the outflow pipe 5, in order to press the liquid adhesive out of the reservoir 4. For a movement-dependent or speed-dependent metering, this piston 8 is driven by one of the wheels 2. For this purpose, said wheel 2 rotates a spindle 12 by means of a variable transmission 9 comprising pulleys 10 and belt 11. This rotary-driven spindle 12 drives a travelling nut 13, which by means of a projection in turn drives piston 8. Instead of the stepwise variable transmission 9, a continuously variable transmission, which is described in greater detail with reference to Fig. 3, can also be used.

Fig. 3 shows in particular a continuously variable transmission 9. A pulley 20 thereof is fitted on a shaft 21 in such a way that it is slidable in the lengthwise direction and engages (not shown) with keys in keyway grooves of said shaft 21. The pulley 20 presses with the peripheral edge against the inside of the wheel 2 which is at the front in the drawing, at a distance from the axis of rotation thereof. Due to the fact that the inside of said wheel can be compressed by spring force, a good friction contact is produced between the pulley 20 and the wheel 2. Since the pulley 20 is slidable along the shaft 21, it can be in engagement with the wheel 2 at various distances from the axis of rotation of the wheel, which means that various transmission ratios can be selected. Said transmission ratio is continuously adjusted by turning knob 22. In this way a shaft 23 is driven by means of a geared transmission 24, which shaft in turn, by means of a tooth system, drives a toothed belt 25 with internal toothing. Connected to said toothed belt 25 is a cam 26, which engages in a slot between the pulley 20 and a concentric auxiliary pulley 27 of smaller diameter at a short distance from it. A movement of the cam 26 thus produces a sliding of the pulley 20, and thus a change in the transmission ratio. By means of a bevel gear transmission 28, shaft 201 drives the spindle 12, along which the travelling nut 13 moves. The travelling nut 13 is designed in such a way here that its internal screw thread is easy to disengage from the external screw thread on the spindle 12. For this, that part of the travelling nut is split, and is held resiliently around the spindle, using springs. The two parts can be moved apart against the spring action, with the result that the internal screw thread comes free of that of the spindle 12. This means that, for example, for fitting a new reservoir 4 the travelling nut 13 is easy to move upwards quickly along the spindle 12, without the spindle 12 needing to rotate. In the case of this design the piston 8 is also placed loose in the reservoir 4. Fixed on the travelling nut 13 is a rod 29 with a stamp 30 on the end, which engages with the piston 8. The reservoir 4 with piston 8 is thus easy to place in and remove from the device 1 without spilling. This embodiment is practical and efficient, easy to handle and relatively cheap to produce.

The invention is not limited to the example of an embodiment shown in the drawings. Therefore, instead of a mechanical coupling between the movement of the device and the metering of the adhesive, it is possible to provide, for example, an electronic coupling. It is also possible, for example, to make the device electrically driven instead of manually. The invention is therefore defined more by the appended claims.

## Claims

1. Device for making a seam join, by feeding in an adhesive, in sheet material such as floor covering, comprising means for moving the device along the seam, movement recording means for measuring the movement of the device along the seam, and adjustable feed means for feeding in the adhesive, in which the feed means are connected to the movement recording means by control means, the device further comprising a reservoir (4) for a liquid adhesive, characterized in that, a piston (8) is situated in said reservoir, for driving said adhesive out of the reservoir, said piston is connected to the control means, by a rod (29) with a stamp (30) on the end, which engages with the piston (8), said rod (29) is fixed on a travelling nut (13) with internal screw thread engaging external screw thread on a spindle (12) which is driven in rotation by the control means (21, 28), which travelling nut (13) is split and is held resiliently around the spindle (12) with springs, such that the two parts of said travelling nut (13) can be moved apart against the spring action to disengage the internal screw thread of the travelling nut (13) from the external screw thread on said spindle (12), such that said reservoir (4) can be replaced after the travelling nut (13) is brought in its initial position.

2. Device according to Claim 1, in which the control means comprise adjusting means for adjusting the transmission ratio between the feed means and the movement recording means.

3. Device according to Claim 1 or 2, in which the movement recording means comprise a wheel which is coupled for driving purposes with the feed means.

4. Device according to Claim 3, in which the adjusting means comprise walls of revolution which are spaced apart and extend coaxially and congruently, and which are connected to the movement recording means and the feed means respectively, and are mutually coupled with a body of revolution which can roll over the walls of revolution along the axis of rotation thereof.

## Patentansprüche

1. Vorrichtung zum Herstellen einer Nahtverbindung in Bahnmaterial, beispielsweise einer Bodenabdeckung, durch Einspeisen eines Klebers, mit Mitteln zum Bewegen der Vorrichtung längs der Naht, Bewegungsaufzeichnungsmitteln zum Abmessen der Bewegung der Vorrichtung längs der Naht, sowie einstellbaren Einspeisemitteln zum Einspeisen des Klebers, worin die Einspeisemittel mit den Bewegungsaufzeichnungsmitteln durch Steuermittel verbunden sind, und wobei die Vorrichtung ferner einen Vorratsbehälter (4) für einen flüssigen Klebstoff aufweist, dadurch **gekennzeichnet,** daß ein Kolben (8) im genannten Vorratsbehälter gelegen ist, um den genannten Kleber aus dem Vorratsbehälter herauszudrücken, der genannte Kolben mit den Steuermitteln durch eine Stange (29) verbunden ist, mit einem Stempel (30) an dem Ende, das in den Kolben (8) eingreift, die genannte Stange (29) an einer Wandermutter (13) mit einem Innengewinde befestigt ist, das in ein Außengewinde an einer Spindel (12) eingreift, die von den Steuermitteln (21, 28) zur Drehung angetrieben ist, die Wandermutter (13) geschlitzt ist und mit Federn federnd rund um die Spindel (12) so gehalten ist, daß die beiden Teile der genannten Wandermutter (13) gegen die Federwirkung auseinanderbewegt werden können, um den Eingriff des Innengewindes der Wandermutter (13) mit dem Außengewinde an der genannten Spindel (12) zu lösen, so daß der genannte Vorratsbehälter (4) ersetzt werden kann, nachdem die Wandermutter (13) in ihre Ausgangslage zurückgebracht ist.

2. Vorrichtung nach Anspruch 1, worin die Steuermittel Einstellmittel aufweisen, um das Übersetzungsverhältnis zwischen den Speisemitteln und den Bewegungsaufzeichnungsmitteln einzustellen.

3. Vorrichtung nach Anspruch 1 oder 2, worin die Bewegungsaufzeichnungsmittel ein Rad aufweisen, welches zu Antriebszwecken mit den Einspeisemitteln gekoppelt ist.

4. Vorrichtung nach Anspruch 3, worin die Einstellmittel Umlaufbewegungswände aufweisen, die beabstandet sind und sich koaxial sowie kongruent erstrecken, und die mit den Bewegungsaufzeichnungsmitteln bzw. Einspeisemitteln verbunden sind und wechselweise mit einem Umlaufbewegungskörper gekoppelt sind, der über die Umlaufbewegungswände längs der Achse ihrer Drehung hinwegrollen kann.

## Revendications

1. Dispositif pour la réalisation d'un assemblage à jonction au moyen d'un adhésif entre des matériaux en feuilles, tels qu'un revêtement de sol, comprenant des moyens pour déplacer le dispositif le long de la jonction, des moyens d'enregistrement du déplacement pour mesurer le déplacement du dispositif le long de la jonction, et des moyens d'alimentation ajustables pour alimenter l'adhésif, dans lequel les moyens d'alimentation sont connectés aux moyens d'enregistrement du déplacement par des moyens de contrôle, ce dispositif comprenant au surplus un réservoir (4) pour un adhésif liquide, caractérisé en ce qu'un piston (8) est situé dans ce réservoir pour expulser cet adhésif hors du réservoir, ce piston est connecté aux moyens de contrôle par une tige (29) portant à son extrémité un tampon (30) qui est au contact du piston (8), ladite tige (29) est fixée sur un écrou baladeur (13) comportant un filetage intérieur coopérant avec un filetage extérieur pratiqué sur une broche (12) qui est entraînée en rotation par les moyens de contrôle (21, 28), lequel écrou baladeur étant fendu et maintenu élastiquement autour de la broche (12) par des ressorts, de telle sorte que les deux parties de l'écrou baladeur (13) puissent être écartées à l'encontre de l'action des ressorts pour dégager le filetage intérieur de l'écrou baladeur (13) du filetage extérieur de ladite broche (12), de telle manière que ledit réservoir (4) puisse être remplacé après que l'écrou baladeur (13) ait été ramené à sa position initiale.

2. Dispositif selon la revendication 1, dans lequel les moyens de contrôle comprennent des moyens de réglage pour ajuster le rapport de transmission entre les moyens d'alimentation et les moyens d'enregistrement du déplacement.

3. Dispositif selon les revendications 1 ou 2, dans lequel les moyens d'enregistrement du déplacement consistent en une roue qui est accouplée avec les moyens d'alimentation à des fins d'entraînement.

4. Dispositif selon la revendication 3, dans lequel les moyens de réglage consistent en des cloisons de révolution qui sont espacées l'une de l'autre et qui s'étendent de façon coaxiale et congruente, et qui sont connectées aux moyens d'enregistrement de déplacement et aux moyens d'alimentation, respectivement, et qui sont mutuellement accouplées avec un solide de révolution qui peut rouler sur les cloisons de révolution le long de leur axe de rotation.
